# EUROPEAN PATENT APPLICATION

(11) **EP 1 002 943 A2**
(43) Date of publication of application: **24.05.2000**
(21) Application number: 99122526.9
(22) Date of filing: 12.11.1999
(51) Int. Cl.: F02D 11/10

(54) **Improved integrated torque motor and throttle body**

(30) Priority: 17.11.1998 US 193676
(71) Applicant: EATON CORPORATION, Cleveland, Ohio 44114-2584 (US)
(72) Inventor: Hatton, Bruce Michael, Lake Orion, Michigan 48360 (US)
(74) Representative: Patentanwälte Rüger, Barthelt & Abel

(57) **Abstract**

An electrically operated throttle valve assembly 110 having a throttle shaft 18 with a portion extending exteriorly of the throttle body 12. Rotor 166 is mounted on the extending portion of shaft 18. A housing 80 concentrically surrounds the rotor 166 and includes a rear wall 86 to which stator 134 is attached. The stator 134 having a plurality of circumferentially spaced pole segments 136, 138, each with a coil 148, 150, is mounted to the rear wall 86 in cantilever over a second shaft 92 and concentrically within the rotor 166. The hollow cylindrical rotor 166 with plural magnets 72, 74 disposed about the inner periphery has a radial web flange 168 and hub 170 which is drivingly attached to one end of the extending portion of shaft 18 with the rotor 166 nested over the stator pole segments 136, 138. Orientation of the rotor magnets 72, 74 and stator pole segment 136, 138 with the throttle plate 16 is inherent in the assembly. Post-assembly calibration is unnecessary.

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### MICROFICHE APPENDIX

Not Applicable

### BACKGROUND OF THE INVENTION

### 1. Field of the Invention

The present invention relates generally to air inlet or throttle valves, and particularly to throttle valves of the butterfly type utilized for controlling air inlet flow to an internal combustion engine.

### 2. Description of the Related Art

In recent times, with the advent of onboard microprocessor controllers for vehicle engines, it has been desired to provide electrically operated control of the vehicle engine throttle in order to more fully utilize the sophistication of the programs contained within the microprocessor for engine fuel delivery and ignition timing control in order to minimize fuel consumption and reduce exhaust emissions. It has also been desired to integrate the throttle control with the onboard engine microcomputer as an adjunct or override for vehicle operator throttle pedal movement. It has further been desired to provide an electrically operated throttle in order to implement the cruise control function and traction control function with the algorithms programmed into the engine control computer.

Heretofore, it has been proposed to provide an electric motor mounted on the vehicle throttle body to provide throttle valve rotation in response to an electric control signal provided by the vehicle engine computer. However, it has proven difficult to mount an electric motor on a vehicle throttle body and provide proper calibration of the motor for precise positioning and rotation of the throttle after mounting of the motor on the throttle body.

Heretofore, it has been proposed to provide stepper motors and relatively high rotations per minute (rpm) low torque servomotors connected through a speed reducing gear train to provide electrical actuation of the vehicle throttle. However, stepper motors can be prohibitively costly for high volume automotive applications; and, servomotors driving the throttle through a gear train can be difficult to calibrate and can lag in providing the necessary response time required for vehicle throttle operation. It has also been proposed to use a torque motor for direct throttle rotation. However, torque motors can be prohibitively heavy and bulky in order to provide adequate torque for desired throttle response. Torque motors can also be difficult to assemble on the throttle body and calibrate for proper throttle positioning. Furthermore, torque motors can require installation and precise calibration (i.e., rotary orientation) of the motor stator and rotor poles with respect to the throttle plate before assembly of the throttle body to the engine intake manifold. However, when it is desired to fabricate the throttle body and engine intake manifold as a single one-piece member, all motor actuators can be quite difficult to assemble and calibrate on such an arrangement.

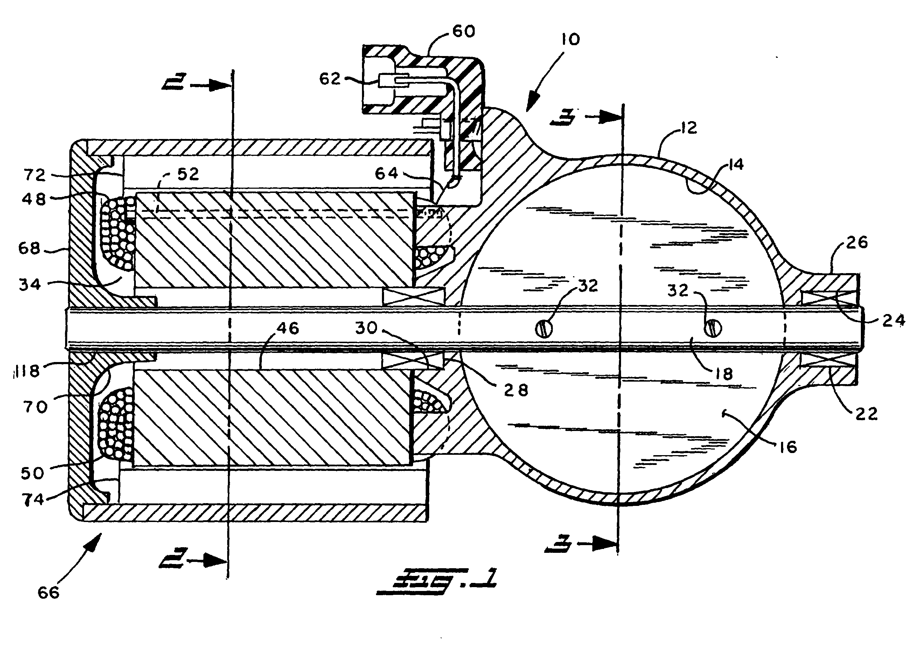

U.S. Patent Application Serial No. 09/098,974 titled Electrically Operated Throttle Valve Assembly, assigned to the Assignee of the present invention and hereby incorporated by reference, describes a throttle valve assembly design where the rotor is supported by the throttle valve shaft. In this design, the shaft 18 extends outward beyond its support bearing by the length of the motor as best seen in Fig. 1.

There still exists a need for an improved design that can reduce the bending moment produced by shaft 18 and mount stator 34 without fasteners positioned in the magnetically critical pole outer diameter (O.D.) area therein.

Still, it is desirable to provide a relatively low cost, lightweight, motorized throttle for a motor vehicle engine which is simple to fabricate, fast in response, lightweight, and requires little or no calibration upon installation.

### BRIEF SUMMARY OF THE INVENTION

The present invention provides an improved torque motor assembly design constructed preferably integrally with a throttle body and valve with the motor having a rotor attached to an extending portion of the throttle shaft. Preferably a portion of the throttle shaft extends exteriorly of the throttle body with the motor rotor configured as a hollow cylinder and mounted on the shaft and nested concentrically over the stator. A second shaft is provided substantially centrally through the stator in a less magnetically critical area, i.e., the inner diameter (ID). The second shaft is preferably a through-bolt smaller in diameter than the throttle shaft. The second shaft is rigidly attached to a housing that concentrically surrounds the stator and rotor.

Accordingly, one object of the present invention is directed to reducing the bending moment of the throttle shaft, i.e., reducing displacements during vibrations.

Another object of the present invention is to shorten the throttle shaft to increase the stiffness of the rotor assembly. This allows for a slightly smaller magnetic air gap and results in improved magnetic efficiency. Shortening the shaft reduces the inertia due to the shaft which results in improved response time.

A further object of the present invention is to reduce or even eliminate attachment bolts from the magnetically critical pole OD.

Still a further object of the present invention is to provide a torque motor assembly design that allows for more winding area in the laminates for a given motor size. This can result in a smaller motor for the same torque.

The various features of novelty which characterize the present invention are pointed out with particularity in the claims annexed to and forming a part of this disclosure. For a better understanding of the invention, its operating advantages and specific objects attained by its uses, reference is made to the accompanying drawings and descriptive matter in which a preferred embodiment of this invention is illustrated.

### BRIEF DESCRIPTION OF THE DRAWINGS

FIG. 1 is a section view taken transversely through the air inlet passage of one embodiment of a vehicle throttle body;
FIG. 2 is a section view taken along section indicating lines 2-2 of FIG. 1;
FIG. 3 is a section view taken along section indicating lines 3-3 of FIG. 1; and
FIG. 4 is a section view similar to FIG. 1 in accordance with the preferred embodiment of the present invention.

### DETAILED DESCRIPTION OF THE INVENTION

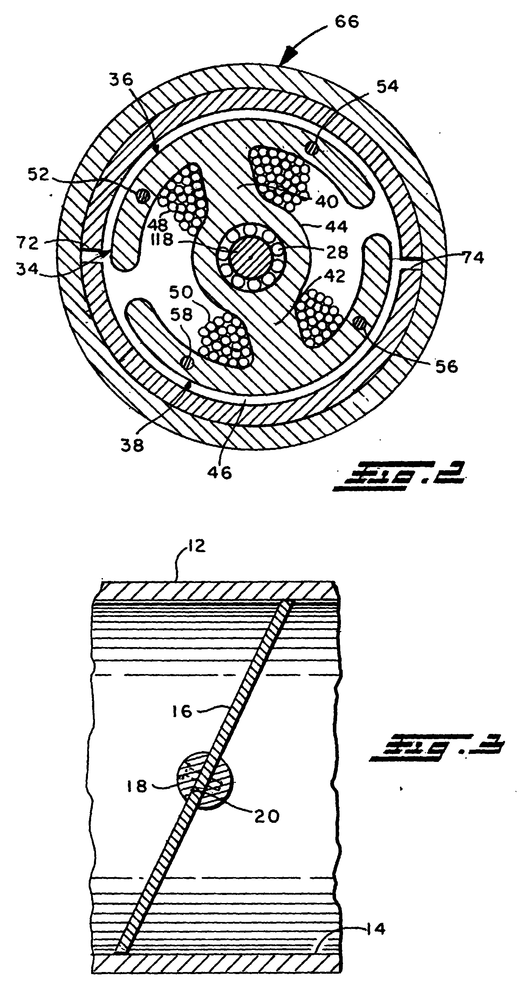

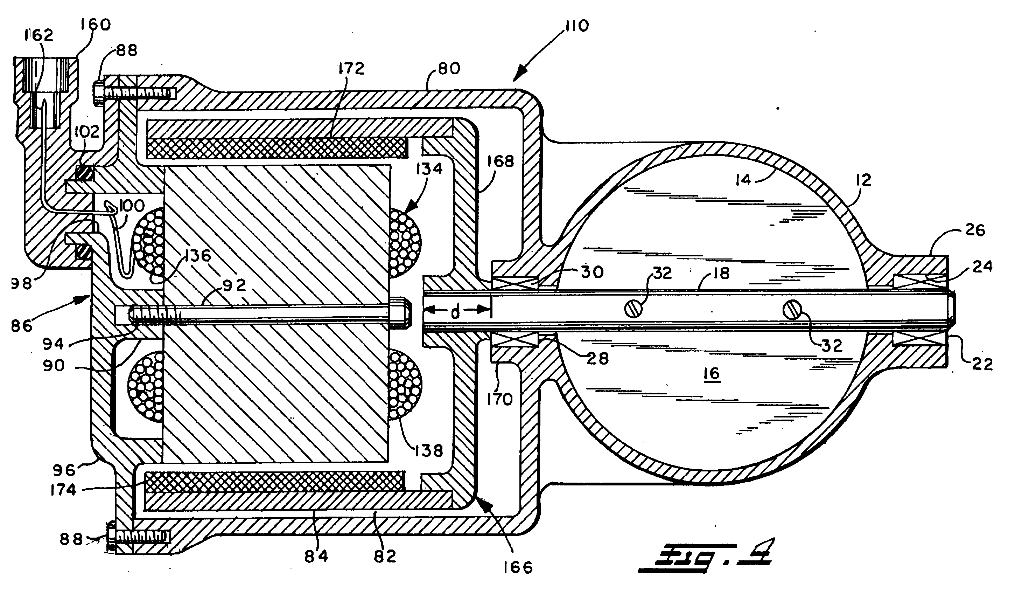

Referring first to FIGS. 1 and 3, a throttle valve assembly is indicated generally at 10 and includes a throttle body structure 12 having formed therethrough an air inlet passage 14 which has disposed therein a rotatable valve member or butterfly plate 16. The valve member 16 is received through a slot 20 formed in a shaft 18 which has one end journalled in a bearing 22 disposed in a recess 24 formed in a boss 26 provided on the body 12. The throttle plate 16 is secured in the slot 20 by a pair of screws 32 received through the shaft 18. Shaft 18 extends through the side of passage 14 opposite boss 26 and is journalled in a second bearing 28 provided in a recess 30 formed in the throttle body exteriorly of air inlet passage 14. In the presently preferred practice of the invention, shaft 18 and its external segment 118 are formed as a one-piece unitary member.

Shaft 18 extends externally beyond bearing 28 in an external segment 118.

A stator indicated generally at 34 has a pair of oppositely disposed semi-cylindrical pole segments or shoes 36, 38 which are disposed in diametrically opposite spaced substantially parallel arrangement. Each of the segments 36, 38 is supported by a longitudinal web denoted respectively 40, 42 attached to a central hub 44 which has a clearance passage or bore 46 formed therethrough and through which is received shaft extension 118.

Each of the webs 40, 42 has a coil wound thereabout denoted respectively 48, 50 and which is formed preferably of magnet wire. The stator 34 is secured to the throttle body preferably by through-bolting with screws or bolts 52, 54, 56, 58 disposed peripherally about the stator and threadedly engaging the throttle body 12. Alternatively stator 34 may be secured by other techniques, such as, for example, providing lugs thereon which are engaged by clips or mounting brackets. Thus, the stator 34 extends in cantilever from throttle body 12 over the shaft external segment 118.

An electrical receptacle 60 is provided on the throttle body 12 and has electrical terminals provided therein, one of which is illustrated and denoted by reference numeral 62 and which is connected to one of the leads 64 of coil 48 and is typical of the coil connections.

Still referring to FIGS. 1 and 2, a rotor indicated generally at 66 has a generally hollow cylindrical configuration and is formed of a material with high magnetic permeability. Rotor 66 is disposed over the stator 34 and is supported by an annular web flange 68 having a hub 70 secured onto the end of shaft extension 118 preferably by press fit engagement. However, it will be understood that the hub 70 may alternatively be positively engaged with shaft extension 118 by any suitable expedient such as a spline fitting, shaft key or weldment.

Rotor 66 has a plurality of permanent magnets 72, 74 each having a preferably semi-cylindrical configuration disposed about the inner periphery of the rotor in circumferentially spaced arrangement to define therebetween a pair of diametrically opposite disposed air gaps. If desired, rotor 66 may be formed integrally as for example by deep drawing or extrusion. In the present practice, the rotor is formed of a straight tubular section 76 attached to a flange member 68 by suitable means such as fasteners, weldment, metal deformation or the like.

In operation, excitation of coils 48, 50 by current flow in one direction therethrough will produce rotation of the rotor 66 by an amount of about 160 degrees (π radians) in one direction; and, reverse polarity energization of the coils produces current flow in an opposite direction which results in rotation of the rotor by about 160 degrees (π radians) in an opposite direction.

Thus, there is provided a throttle valve assembly having the throttle valve rotated by energization of a permanent magnet torque motor which is built in cantilever on the throttle body with the rotor assembled to an external portion of the throttle shaft. This arrangement inherently provides appropriate orientation of the permanent magnets in the rotor and stator poles with the throttle plate and thereby eliminates separate calibration and simplifies assembly of the throttle valve assembly.

The simple build-up and inherent rotary self positioning of the motorized throttle valve assembly has the advantage of being particularly suitable for installation in an integrally formed throttle body and intake manifold arrangements.

Referring now to Fig. 4, where like numerals indicate like or similar features throughout the several views, there is shown a sectional view of an improved throttle valve assembly generally designated 110 according to the present invention. Throttle valve assembly 110 includes a throttle body 12 with an air inlet passage 14 and a rotatable valve member 16 disposed therein. Valve member 16 is received through a slot 20 (as seen in Fig. 3) formed in shaft 18 and is secured thereto with suitable fasteners 32. Shaft 18 has one end journalled in a bearing 22 disposed in recess 24 formed in the boss 26. In the present invention, shaft 18 only extends through the side of passage 14 opposite boss 26 a sufficient distance to allow for mounting the rotor 166 thereon.

Preferably, a generally cylindrical housing 80 is connected to the throttle body 12 at the recess 30. Housing 80 may be attached to throttle body 12, or more preferably is integrally formed therewith. Housing 80 concentrically receives the rotor 166 therein and provides a gap 82 that allows the rotor 166 to rotate therein. Rotor 166 has a generally hollow cylindrical configuration and is made from a material with high magnetic permeability. In the preferred embodiment, rotor 166 is constructed with a tubular section 84 which is attached by suitable means at one end to the web flange 168. Flange 168 includes a centrally located hub 170 with a bore that receives the extending portion of shaft 18 for mounting rotor 166 thereon by way of a press fit engagement, spline fitting, shaft key, weldment or the like for positive engagement. Rotor 166 further includes a plurality of permanent magnets 172, 174 for a 2-pole or 4-pole configuration. Each magnet 172, 174 preferably has a semi-cylindrical configuration disposed about the inner periphery of the tubular section 86 of rotor 166 in a circumferentially spaced arrangement to define therebetween a pair of diametrically oppositely disposed air gaps. Rotor 166 alternatively may be formed integrally as, for example, by deep drawing or possibly extrusion.

A rear wall or cover 86 is attached to the open end of housing 80 with any suitable means like fasteners 88, for example. Rear wall 86 has a centrally located hub 90 with preferably a threaded bore 94 constructed to receive a threaded end of a second shaft 92, e.g. preferably a bolt.

The second shaft 92 extends through stator 134 in substantial axial alignment with shaft 18' and securely holds the stator in a concentric orientation within rotor 166. Advantageously, the present invention allows for the placement of second shaft 92 in a less magnetically critical area of the stator, i.e., substantially centrally positioned within stator 134. Rear wall 86 in the preferred embodiment includes at least two recesses 96 for a 2-pole configuration and may contain four recesses for a 4-pole configuration, each recess 96 accommodating one of the pole segments 136, 138 of stator 134. An opening 98 with a boss portion in the rear wall 86 receives one of the leads 100 from the coil which is typical of coil connections. Lead 100 is electrically connected to an electric terminal 162 positioned in an electrical receptacle 160 situated in opening 98. Ordinarily, the motor would require two terminals 162, but only one is shown. An O-ring 102 is employed to provide a seal around opening 98. Stator 134 can still be constructed of like materials and in a like manner to that of stator 34. In contrast to other designs, second shaft 92 eliminates the need for supporting rotor 66 in Fig. 1 with the longer shaft 18, 118. The shorter shaft 18 in Fig. 4 increases the stiffness of the rotor assembly and reduces displacements during vibrations. This allows for a slightly smaller magnetic air gap due to smaller safety margins and the resulting improved magnetic efficiency. By employing second shaft 92 to allow for a shorter shaft 18, the throttle valve assembly 110 produces a smaller moment of inertia resulting in improved response time.

By providing a shorter shaft 18 in throttle valve assembly 110, the clearance normally provided in the laminates of stator 34 are not required in stator 134. Thus, the four laminate attachment bolts 52, 54, 56, 58 used in the design shown in Fig. 1 are eliminated. Those attachment bolts 52, 54, 56, 58 are situated in a magnetically critical area of the stator 34. By replacing these bolts with a single bolt 92 or similar mounting means including, without limitation, a pressed pin connection, rivet through rear wall, welding, or the like in a less magnetically critical area, the design of the throttle valve assembly 110 of the present invention allows for more winding area in the laminates. This feature allows a smaller motor to be constructed for the same torque resulting in weight and cost savings.

In operation, excitation of coils in the stator 134 by current flow in one direction will cause rotor 166 to rotate by an amount of about 160 degrees in one direction for a 2-pole design (about 80° for a 4-pole design). By reversing polarity, energization of the coils produces current flow in an opposite direction which causes the rotor to rotate an equivalent distance in the opposite direction.

The throttle valve 110 according to the present invention allows for several advantages in assembly including, without limit, the following. The design of the instant invention provides a drop-in feature for rotor 166 into housing 80. Then, stator 134 is inserted therein. Rear wall 86 seals the throttle valve assembly providing protection from dust, dirt, water, snow, or the like, i.e., environmental protection in a fairly hostile environment.

The present invention requires no electrical connections during final assembly since the stator 134 has all of its connections completed prior to placement within rotor 166.

The design of the present invention allows for the integration of additional functions like position sensing, for example, into the stator subassembly and use its electrical connector.

In view of the foregoing, the throttle valve assembly 110 offers the following advantages: low shaft bending, smaller laminate (ID) for stator, low rotor inertia, and an improved assembly technique. The preferred removable rear wall 86 allows assembly of the stator 134 thereon prior to fastening wall 86 onto housing 80. This facilitates alignment and spacing.

While specific embodiments of the invention have been shown and described in detail to illustrate the application of the principles of the invention, it will be understood that the invention may be embodied otherwise without departing from such principles. Although the invention has hereinabove been described with respect to the illustrated embodiments, it will be understood that the invention is capable of modification and variation and is limited only by the following claims.

## Claims

1. An electrically operated throttle valve assembly (110) comprising:
(a) a throttle body (12) defining an air passage (14) therethrough;
(b) a first shaft member (18) extending transversely through said passage (14), said first shaft (18) having a valve member (16) thereon, said first shaft (18) being journalled in a first and second bearing surface (22, 30) disposed on opposite sides of said passage (14) for rotation therein, wherein said valve member (16) is rotated with said first shaft (18); and said first shaft (18) having a portion extending externally of said throttle body (12);
(c) a hollow generally cylindrical rotor (166) formed of material having a relatively high magnetic permeability, said rotor (166) being disposed only at one end on said extending portion of said first shaft (18) for rotation therewith;
(d) a plurality of magnets (172, 174) disposed in the hollow of said rotor (166) in circumferentially spaced arrangement;
(e) a stator (134) formed of material of relatively high magnetic permeability, said stator (134) extending in cantilever from said throttle body (12) and disposed within said rotor (166), said stator (134) having a plurality of discrete pole segments (136, 138) disposed thereabout, each segment (136, 138) having an electrically conductive coil wound thereon, said stator (134) being positioned about a second shaft member (92), said second shaft member (92) being located substantially centrally in said stator (134) with one end of said second shaft member (92) being fixedly attached to a rear wall (86) of a housing (80) surrounding said stator (134) and said rotor (166); and,
(f) terminal means (162) connected to each of said electrically conductive coils (100), said terminal means (162) adapted for external electrical connection thereto.

2. The throttle valve assembly (110) defined in claim 1 wherein said valve member (16) comprises a butterfly plate.

3. The throttle valve assembly (110) defined in claim 1 wherein said stator includes 4-pole segments and said rotor includes four magnets.

4. The throttle valve assembly (110) defined in claim 1 wherein said stator (134) is attached to said rear wall (86) of said housing (80) with a through-bolt (92).

5. The throttle valve assembly (110) defined in claim 1 wherein said throttle body (12) is a member selected from the group consisting of (a) a separate member adapted for external connection to an engine inlet manifold, and (b) an integrally formed one-piece member with the engine inlet manifold.

6. The throttle valve assembly (110) defined in claim 1 wherein said rotor (166) is formed of a generally straight cylindrical shell attached to a radially extending flange (168) having a hub (170) with said extending portion of said first shaft (18) received therein.

7. A method of making a throttle valve assembly (110) comprising the steps of:
(a) forming an engine air inlet passage (14) in a throttle body (12);
(b) disposing a first shaft (18) transversely through said inlet passage (14) and journalling said first shaft (18) on said body (12) on opposite sides of said passage (14) and disposing a butterfly valve (16) on said shaft (18) in said passage (14);
(c) extending a portion of said first shaft (18) externally of said body (12) and disposing a hollow cylindrical rotor (166) with magnets (172, 174) on the extending portion of said first shaft (18) and rotating the rotor (166) with the extending portion of said first shaft (18); and
(d) disposing a stator (134) with plural pole segments (136, 138) each having a coil within said rotor (166) and attaching said stator (134) to a rear wall (86) of a housing (80) surrounding said stator (134) and rotor (166) with a second shaft member (92) having one end fixedly attached to said rear wall (86) of said housing (80).

8. The method defined in claim 7, wherein said step of attaching said stator (134) includes the step of cantilevering said stator (134) relative to said throttle body (12).

9. The method defined in claim 8, wherein said step of attaching said stator (134) further includes the step of providing means for mounting (90, 94) substantially centrally located within said stator (134).

10. The method defined in claim 9, wherein said step of forming an air inlet passage (14) includes the step of forming said throttle body (12) integrally with an engine inlet manifold.

11. The method defined in claim 10, wherein said step of journalling further includes the step of disposing a first and second bearing (22, 30) on opposite sides of said first shaft (18) within said passage (14).

12. The method defined in claim 11, further comprising the step of disposing at least two electrical terminals (162) on said rear wall (86) of said housing and connecting said terminals (162) to each of said coils (100).
